Europäisches Patentamt

European Patent Office

Office européen des brevets

(19)

(11) Publication number: **0 266 187**
**A2**

# (12) EUROPEAN PATENT APPLICATION

(21) Application number: 87309522.8

(22) Date of filing: 28.10.87

(51) Int. Cl.⁴: **C 01 B 21/14**
**C 25 B 1/00**

(30) Priority: 29.10.86 JP 257840/86

(43) Date of publication of application:
04.05.88 Bulletin 88/18

(84) Designated Contracting States: **DE FR GB**

(71) Applicant: **SUMITOMO CHEMICAL COMPANY, LIMITED**
**15 Kitahama 5-chome Higashi-ku**
**Osaka-shi Osaka 541 (JP)**

(72) Inventor: **Matsuda, Teruo**
**6-19, Hoshigoe-cho**
**Niihama-shi Ehime (JP)**

**Miki, Masayoshi**
**4-14, Hoshigoe-cho**
**Niihama-shi Ehime (JP)**

**Ochi, Hiromu**
**4-10-24, Kitauchi-cho**
**Niihama-shi Ehime (JP)**

(74) Representative: **Diamond, Bryan Clive et al**
**Gee & Co. Chancery House Chancery Lane**
**London WC2A 1QU (GB)**

(54) Production of hydroxylamine nitrate by dialysis.

(57) An aqueous solution of hydroxylamine sulfate and a solution of nitric acid are each circulated from tanks (5, 6) through alternate adjacent chambers in an electrodialysis cell (2) or diffusion dialysis cell, the chambers being separated by cation exchange membrane (1); dialysis occurs so that $NH_3OH^+$ and $H^+$ ions pass through the membrane and the nitric acid is converted to hydroxylamine nitrate product. The solutions are recirculated by pumps (7, 8).

In the hydroxylamine sulfate solution, the $SO_4^{--}$ anions remain, and since the $H^+$ ions permeate thereinto, sulfuric acid is formed; and at a concentration of above 0.2 N the $SO_4^-$ ion passes through the membrane and would contaminate the product. The $NH_3OHNO_3$ solution is therefore circulated simultaneously into a diffusion dialysis cell (22) having a number of anion exchange membranes (21); pure water is circulated countercurrently through alternate chambers in the cell (22) to remove the acid.

EP 0 266 187 A2

## Description

### PRODUCTION OF HYDROXYLAMINE NITRATE BY DIALYSIS

This invention relates to a process for the production of high-purity hydroxylamine nitrate having a low sulfuric acid ion concentration from an aqueous hydroxylamine sulfate solution and an aqueous nitric acid solution.

Hydroxylamine nitrate is a useful compound as, for example, a reducing agent of plutonium in an extraction step of the reprocessing of a spent nuclear fuel.

The following methods are known for the production of hydroxylamine nitrate.

(1) Converting hydroxylamine sulfate into a corresponding nitrate using a cation exchange resin (see Ind. Eng. Chem. Process Des. Dev., 16, 220 (1977) and Japanese Patent Application (OPI) No. 8060/72). (The term "OPI" as used herein means an "unexamined published application".)

(2) Blowing NO and H₂ gases in the presence of a Pt catalyst (see German Patent Application (OLS) No. 2,100,036 and Japanese Patent Application (OPI) No. 14099/72).

(3) Reacting hydroxylamine sulfate with barium nitrate (see U.S. Patent 4,066,736).

(4) Hydrogenating nitric acid in the presence of a Pd catalyst (see Dutch Patent Application No. 7,009,685).

(5) Hydroxylamine sulfate or hydrochloride and nitric acid are electrodialysed using an ion exchange membrane (see French Patent Application No. 2,243,904 and Ind. Eng. Chem. Process Des. Dev., 20, 361 (1981)).

Among the conventional technologies, Method (1) wherein a sulfate is converted into a corresponding nitrate using a cation exchange resin is a method in which a hydroxylammonium ion ($NH_3OH+$) in the hydroxylamine sulfate is one carried on a cation exchange resin and then eluted with a nitric acid solution. This method is, however, a complicated batch process and there is the danger of explosion by the reaction between the ion exchange resin and nitric acid (see Chem. Eng. Nov., 17, 271 (1980)).

In Methods (2) and (4) wherein nitrogen oxide or nitric acid is hydrogenated in the presence of a catalyst, the use of dangerous nitrogen oxide and H₂ gases is essential; the catalyst to be used is a special one; and regeneration of the catalyst is complicated.

In Method (3), handling of by-product barium sulfate is complicated, and disposal of the barium sulfate is also troublesome.

In Method (5) wherein hydroxylamine nitrate is produced from hydroxylamine sulfate or hydrochloride by an electrodialysis method using cation and anion exchange membranes and which utilizes a double decomposition reaction, four different types of fluids are passed through four chambers of an electrodialysis tank having the four chambers as one block, which are partitioned alternately by cation exchange membranes and anion exchange membranes, and the product hydroxylamine nitrate is drawn out of one of the four chambers. The process of using ion exchange membranes is, however, low in productivity per equipment and total area of the membrane as well as being undesirably accompanied by intermingling of sulfuric acid ion ($SO_4^{2-}$) in the hydroxylamine nitrate side.

As the result of various investigations for obtaining a process for producing hydroxylamine nitrate safely and in high purity by solving the aforesaid problems in the conventional production processes of hydroxylamine nitrate, the inventors have discovered that high-purity hydroxylamine nitrate can be easily and efficiently produced by performing electrodialysis or diffusion dialysis using a cation exchange resin membrane and, at the same time, removing sulfuric acid from the aqueous hydroxylamine sulfate solution by diffusion dialysis using an anion exchange resin membrane.

Thus, the invention provides a process for production of high-purity hydroxylamine nitrate, which comprises producing hydroxylamine nitrate from an aqueous hydroxylamine sulfate solution and an aqueous nitric acid solution by electrodialysis or diffusion dialysis using a cation exchange resin membrane and, at the same time, circulating the aqueous hydroxylamine sulfate solution into a diffusion dialysis cell using an anion exchange resin membrane to remove free sulfuric acid in the aqueous hydroxylamine sulfate solution by diffusion dialysis.

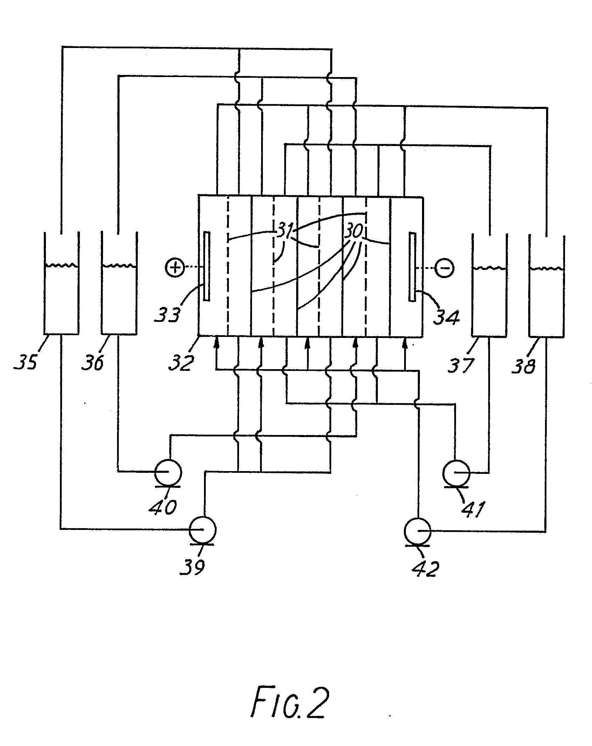

Now, the invention is specifically explained with reference to the accompanying drawings (Fig. 2 is referred to in Comparative Example 2).

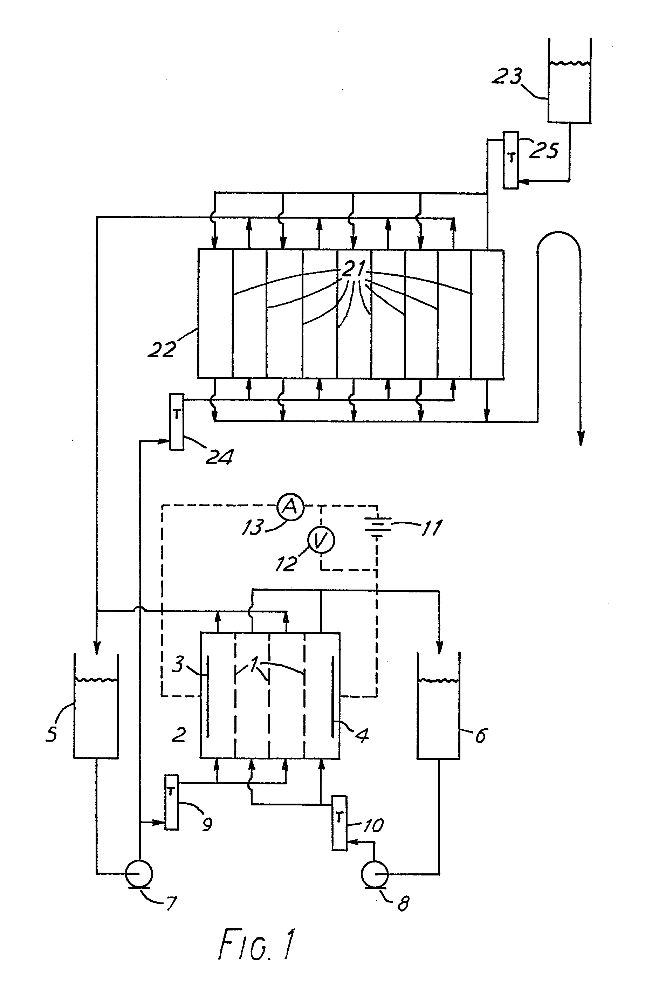

Fig. 1 shows an example of the apparatus for producing hydroxylamine nitrate by electrodialysis in this invention. An electrodialysis cell 2 is constructed by assembling a number of cation exchange membranes 1. A direct current voltage is applied between an anode 3 and a cathode 4 by means of a direct current power source 11.

As shown in Fig. 1, two kinds of liquids having a different composition are alternatively supplied and circulated into respective chambers partitioned from each another by the cation exchange membranes 1.

That is, an aqueous hydroxylamine sulfate solution stored in a tank 5 is sent to each chamber in the electrodialysis cell 2 through a flowmeter 9 and a conduit by means of a pump 7. On the other hand, an aqueous nitric acid solution stored in a tank 6 is sent to each of the alternate chambers of the electrodialysis cell through a flowmeter 10 and a conduit by means of a pump 8 as shown in Fig. 1.

Also, at the same time, the aqueous hydroxylamine sulfate solution is sent to a diffusion dialysis cell 22 which is constructed by assembling a number of anion exchange membranes 21 through a flowmeter 24. The solution from which sulfuric acid is removed in the diffusion dialysis cell 22 is circulated into the tank 5. Pure water is charged into a tank 23 and sent to alternate chambers through a flowmeter 25 in the diffusion dialysis cell 22 countercurrently to the flow direction of the aqueous hydroxylamine sulfate solution. In this case, it is preferred for lowering the concentration of sulfuric acid that the pure water is not recirculated.

In Fig. 1, numerals 12 and 13 indicate a volt meter and an ammeter, respectively.

Hydroxylammonium ion ($NH_3OH+$) in the aqueous hydroxylamine sulfate solution is attracted by the cathode in the electrodialysis tank and permeates through the cation exchange membrane to move into the region of the aqueous solution of nitric acid. Almost all of the sulfuric acid anions ($SO_4^{2-}$) in the aqueous hydroxylamine sulfate solution remain in the solution as they do not then permeate through the cation exchange membrane. On the other hand, in the region of the aqueous nitric acid solution, hydrogen ion ($H+$) permeates through the cation exchange membrane so as to move into the chamber of the hydroxylamine sulfate, and remaining nitric acid anion ($NO_3-$) binds with the permeated hydroxylammonium ion to form hydroxylamine nitrate, as illustrated by the following equation:

$$NO_3- \; + \; NH_3OH+ \; \rightarrow \; NH_3OH-NO_3$$

In the chamber of the hydroxylamine sulfate, sulfuric acid is formed, as illustrated by the following equation.

$$SO_4^{2-} \; + \; 2H+ \; \rightarrow \; H_2SO_4$$

The concentration of hydroxylamine sulfate is maintained much higher than that of hydroxylamine nitrate which is synthesized in the neighboring chamber partitioned by the cation exchange membrane. The concentration of hydroxylamine sulfate is preferably maintained higher than that of hydroxylamine nitrate by about one mole or more. Thus, not only a high rate of electrodialysis is obtained, but also a loss of hydroxylammonium ion ($NH_3OH+$) caused by permeation from the region of formed hydroxylamine nitrate to that of hydroxylamine sulfate is depressed.

The concentration of hydroxylamine nitrate formed in the aqueous nitric acid solution rises gradually, whereas the concentration of free nitric acid decreases conversely.

In the region of the aqueous hydroxylamine sulfate solution which is a raw material, as the concentration of hydroxylamine sulfate gradually decreases, the concentration of free sulfuric acid formed gradually increases. If the concentration of free sulfuric acid is 0.2 normal or more, the sulfuric acid ion which is an anion permeates through even the cation exchange membrane and intermingles into the aqueous hydroxylamine nitrate solution which is the product. For preventing the intermingling of sulfuric acid, the aqueous hydroxylamine sulfate solution is, at the same time, sent into the diffusion dialysis cell composed of anion exchange membranes only, whereby the aforesaid free sulfuric acid is passed through the anion exchange membranes and transferred into pure water supplied into the adjacent chamber. Thus, the free sulfuric acid is removed.

In this case, by increasing the area of membrane by, e.g., increasing the number of anion exchange membranes which constitute the diffusion dialysis cell 22, the concentration of sulfuric acid in the aqueous hydroxylamine nitrate solution can be reduced to a lower level.

In this invention, the dialysis of hydroxylamine ion sufficiently proceeds even at a low current density for the electrodialysis.

There is no particular restriction on the electrodes for use in this invention, and, for example, platinum-plated titanium can be used as the anode and stainless steel can be used as the cathode.

As the ion exchange membranes for use in this invention, strongly acidic cation exchange membranes and strongly basic anion exchange membranes, both of which are generally commerically available, can be used. For example, for the cation exchange membrane, Neosepta® CM-1 (made by Tokuyama Soda Co., Ltd.), Selemion® CMV (made by Asahi Glass Co., Ltd.), and Aciplex® K-101 (Asahi Chemical Industry Co., Ltd.) can be used; and for the anion exchange membrane, Neosepta® AM-1 (made by Tokuyama Soda Co., Ltd.), Selemion® AMW (made by Asahi Glass Co., Ltd.), and Aciplex® A-101 (made by Asahi Chemical Industry Co., Ltd.) can be used.

In the case of producing hydroxylamine nitrate by diffusion dialysis in this invention, the electrodialysis cell 2 shown in Fig. 1 is used as a diffusion dialysis cell without having an anode, a cathode, and a direct current power source equipment, or the electrodialysis cell is used as it is without applying a direct current voltage. Also, the cell is operated in the same manner as described above for the case of electrodialysis except that a direct current voltage is not applied. The behavior of ions, etc. is the same as in the case of the electrodialysis described above.

There is no particular restriction on the temperature in the process of this invention, but the process is generally performed at room temperature without heating or cooling.

By the process of this invention, high-purity hydroxylamine nitrate having a very low content of sulfuric acid ion is obtained at high productivity per unit area of the membrane as compared with the conventional electrodialysis using alternately cation exchange membranes and anion exchange membranes, and the industrial value of the process of this invention is, therefore, large.

The following examples serve to illustrate this invention but not to limit it.

EXAMPLE 1

Hydroxylamine nitrate was produced using the apparatus as shown in Fig. 1, which is compsed of an electrodialysis cell equipped with an assembly of four cation exchange membranes, "Neosepta® CM-1" (made by Toluyama Soda Co., Ltd.) each of 1 $dm^2$ in area and a diffusion dialysis cell equipped with an assembly of twenty anion exchange membranes "Neosepta® AM-1" (made by Toluyama Soda Co., Ltd.) each of 1 $dm^2$ in

area. A platinum-plated titanium plate of 1 dm² in area was used as an anode and an SUS-316 plate of 1 dm² in area was used as a cathode. The distance between the ion exchange membranes in this apparatus was about 1 mm.

After charging 500 ml of an aqueous 2.7 N hydroxylamine sulfate solution in a tank 5 and 500 ml of an aqueous 1.1 N nitric acid solution in a tank 6, each of the solutions was circulated through the electrodialysis cell 2 by means of a pump 7 or pump 8, respectively, at a flow rate of 1 liter/min. At the same time, a direct current voltage of 4 volts was applied between the anode 3 and the cathode 4 by a direct current power source 11.

On the other hand, the aqueous hydroxylamsine sulfate solution was simultaneously circulated through the alternate chambers of the diffusion dialysis cell 22 at a flow rate of 2 liters/min. Also, pure water was put into a tank 23 and sent to each chamber adjacent to the aforesaid chambers countercurrently to the flow direction of the aqueous hydroxylamine sulfate solution at a flow rate of 0.5 liter/min.

The solutions in the tanks 5 and 6 were sampled at specified time intervals, and the concentration of free acid and the concentration of hydroxylamine were analyzed. the results obtained are shown in Table 1.

In addition, the analysis of hydroxylamine was performed by oximization of hydroxylamine with cyclohexanone and acidimetry of the liberated acid.

## Table 1

| Time of Electro-dialysis (min.) | Concentration of Solution in Tank 5 (Normal) | | Concentration of Solution in Tank 6 (Normal) | |
|---|---|---|---|---|
| | Hydroxyl-amine Sulfate | Free Sulfuric Acid | Hydroxyl-amine Nitrate | Free Nitric Acid |
| 0 | 2.7 | 0.01 | 0.00 | 1.1 |
| 60 | 2.2 | 0.06 | 0.55 | 0.53 |
| 120 | 1.94 | 0.16 | 0.77 | 0.29 |
| 180 | 1.78 | 0.18 | 0.90 | 0.14 |

The concentration of sulfuric acid ion in the product, hydroxylamine nitrate solution in the tank 6 after 180 minutes was 60 ppm. The analysis was performed by a nephelometry (JIS K0103).

EXAMPLE 2

Hydroxylamine nitrate was produced using an apparatus which is composed of a diffusion dialysis cell equipped with an assembly of four cation exchange membranes "Neosepta® CM-1" (made by Tokuyama Soda Co., Ltd.) each of 1 dm² in area and a diffusion dialysis cell equipped with an assembly of twenty anion exchange membranes "Neosepta® AM-1" (made by Tokuyama Soda Co., Ltd.) each of 1 dm² in area, the apparatus being the same as the above-described apparatus shown in Fig. 1 except that the anode 3, the cathode 4, and the direct current power source 11 were removed from the electrodialysis cell 2. In addition, the distance of the ion exchange membranes in the apparatus was about 1mm.

After charging 500 ml of an aqueous 2.08 N hydroxylamine sulfate solution in the tank 5 and 500 ml of an aqueous 1.14 N nitric acid solution in the tank 6, each of the solutions was circulated through the diffusion dialysis cell 2 by means of the pump 7 or pump 8, respectively, at a flow rate of 0.2 liter/min.

On the other hand, an aqueous hydroxylamine sulfate solution was simultaneously circulated through the every other chambers of the diffusion dialysis 22 at a rate of 2 liters/min. Also, pure water was charged into the tank 23 and sent to each chamber adjacent to the aforesaid chamber countercurrently to the flow direction of the aqueous hydroxylamine sulfate solution at a flow rate of 0.5 liter/min.

The results obtained are shown in Table 2 below.

## Table 2

| Time of Electro-dialysis (min.) | Concentration of Solution in Tank 5 (Normal) | | Concentration of Solution in Tank 6 (Normal) | |
|---|---|---|---|---|
| | Hydroxyl-amine Sulfate | Free Sulfuric Acid | Hydroxyl-amine Nitrate | Free Nitric Acid |
| 0 | 2.08 | 0.01 | 0.00 | 1.14 |
| 10 | 1.96 | 0.07 | 0.12 | 1.03 |
| 30 | 1.81 | 0.17 | 0.28 | 0.83 |
| 60 | 1.58 | 0.20 | 0.51 | 0.58 |
| 90 | 1.40 | 0.20 | 0.68 | 0.38 |
| 120 | 1.28 | 0.18 | 0.78 | 0.27 |
| 180 | 1.14 | 0.07 | 0.92 | 0.12 |

The concentration of sulfuric acid ion in the product, hydroxylamine nitrate solution in the tank 6 after 180 minutes was 77 ppm.

COMPARATIVE EXAMPLE 1

Hydroxylamine nitrate was produced in the same manner as in Example 1 except that an electrodialysis cell equipped with twenty-one cation exchange membranes "Neosepta® CM-1" (made by Tokuyama Soda Co., Ltd.) each having 1 dm² in area was used, without performing the diffusion dialysis simultaneously.

After charging 500 of an aqueous 3.04 N hydroxylamine sulfate solution in the tank 5 and 500 ml of an equeous 1.21 N nitric acid solution in the tank 6, each of the solutions was circulated through the electrodialysis cell 2 by means of the pump 7 or the pump 8, respectively, at a flow rate of 2 liters/min.

At the same time, a direct current voltage of 2 volts was applied between the anode 3 and the cathode 4 by the direct current power source 11 to perform the electrodialysis. The results obtained are shown in Table 3.

## Table 3

| Time of Electro-dialysis (min.) | Concentration of Solution in Tank 5 (Normal) | | Concentration of Solution in Tank 6 (Normal) | |
|---|---|---|---|---|
| | Hydroxyl-amine Sulfate | Free Sulfuric Acid | Hydroxyl-amine Nitrate | Free Nitric Acid |
| 0 | 3.04 | 0.01 | 0.00 | 1.21 |
| 30 | 2.18 | 0.80 | 0.74 | 0.41 |
| 60 | 2.06 | 0.88 | 0.80 | 0.36 |

Also, the concentration of sulfuric acid ion in the product, hydroxylamine nitrate solution in the tank 6 after 60 minutes was 650 ppm.

## COMPARATIVE EXAMPLE 2

Hydroxylamine nitrate was produced by means of an electrodialysis apparatus shown in Fig. 2 which is constructed of four cation exchange membranes "Neosepta® CM-1" (made by Tokuyama Soda Co., Ltd.) each of 2 dm² in area and four anion exchange membranes "Neosepta® AM-1" (made by Tokuyama Soda Co., Ltd.) each of 2 dm² in area.

An electrodialysis tank 32 was constructed of cation exchange membranes 30, anion exchange membranes 31, an anode 33 made of a platinum-plated titanium plate, and a cathode 34 made of an SUS-316 plate.

500 ml of an aqueous 1.4 N hydroxylamine sulfate solution was fed into a tank 35; 500 ml of an aqueous 0.2 N nitric acid solution was fed to a tank 36; 500 ml of an aqueous 1.3 N nitric acid solution was fed to a tank 37; and 1000 ml of an aqueous 0.2 N sulfuric acid solution was fed to a tank 38. Pumps 39, 40, 41, and 42 were operated to circulate the solutions through the electrodialysis tank 32, respectively at flow rates of from about 200 to 300 ml/min.

At the same time, a direct current voltage was applied between the electrodes, and the electrodialysis was performed at a current density of 2 A.

After one hour since then, the current density was reduced to 1 A. The results obtained are shown in Table 4.

### Table 4

### Concentration of Solution in Each Tank (Normal)

| | | \_ Dialysis Time (min.) \_ | | | | |
|---|---|---|---|---|---|---|
| | | 0 | 30 | 60 | 120 | 180 |
| Tank 35 | Hydroxylamine Sulfate | 1.42 | 1.18 | 0.99 | 0.79 | 0.70 |
| | Free Sulfuric Acid | 0.02 | 0.20 | 0.32 | 0.44 | 0.47 |
| Tank 36 | Hydroxylamine Nitrate | 0.02 | 0.26 | 0.45 | 0.63 | 0.69 |
| | Free Nitric Acid | 0.17 | 0.15 | 0.16 | 0.19 | 0.20 |
| Tank 37 | Hydroxylamine Nitrate | 0.01 | 0.01 | 0.02 | 0.03 | 0.03 |
| | Free Nitric Acid | 1.24 | 0.98 | 0.78 | 0.55 | 0.46 |
| Tank 38 | Hydroxylamine Sulfate | 0.0 | 0.0 | 0.0 | 0.0 | 0.01 |
| | Free Sulfuric Acid | 0.20 | 0.23 | 0.26 | 0.31 | 0.35 |

Also, the concentrations of sulfuric acid ion in the product, hydroxylamine nitrate solution in the tank 36 after 60 minutes and 180 minutes were 130 ppm and 181 ppm, respectively.

## Claims

1. A process for production of high-purity hydroxylamine nitrate from an aqueous hydroxylamine sulfate solution and an aqueous nitric acid solution by electrodialysis or diffusion dialysis through at least one cation exchange membrane (1), characterised by, at the same time, circulating the aqueous hydroxylamine sulfate solution through a diffusion dialysis cell (22) having at least one anion exchange membrane (21), so as to remove by diffusion dialysis free sulfuric acid from the hydroxylamine sulfate solution.

2. A process as in Claim 1, wherein the cation exchange membrane (1) is a strongly acidic cation exchange membrane.

3. A process as in Claim 1, wherein the anion exchange membrane (1) is strongly basic anion exchange membrane.

4. A process as in Claim 1, 2 or 3, wherein the electrodialysis or diffusion dialysis is performed while keeping the concentration of hydroxylamine sulfate at least 1 mol higher than the concentration of hydroxylamine nitrate.

5. A process as claimed in any preceding claim, wherein the free sulfuric acid is removed by dialysis into pure water circulated through a chamber of the diffusion dialysis cell adjacent to a chamber containing said hydroxylamine sulfate solution.

FIG. 1

FIG.2